(19) Europäisches Patentamt / European Patent Office / Office européen des brevets

(11) **EP 2 337 166 B1**

(12) **FASCICULE DE BREVET EUROPEEN**

(45) Date de publication et mention
de la délivrance du brevet:
**30.11.2016 Bulletin 2016/48**

(51) Int Cl.:
*H01S 3/067* (2006.01)    *C03B 37/012* (2006.01)

(21) Numéro de dépôt: **10306471.3**

(22) Date de dépôt: **21.12.2010**

(54) **Procédé de fabrication d'une fibre optique monomode à coeur dopé terres rares et fibre optique monomode à coeur dopé terres rares**

Herstellungsverfahren einer optischen Monomodefaser mit einem Seltenerdmetall-dotierten Kern, und entsprechende optische Monomodefaser mit einem Seltenerdmetall-dotierten Kern

Method for manufacturing a single-mode optical fibre with rare-earth-doped core and single-mode optical fibre with rare-earth-doped core

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2009 FR 0959332**

(43) Date de publication de la demande:
**22.06.2011 Bulletin 2011/25**

(73) Titulaire: **IXBLUE**
**78160 Marly-le-Roi (FR)**

(72) Inventeurs:
 • **Robin, Thierry**
  **22450, Camlez (FR)**
 • **Cadier, Benoît**
  **22700, Perros Guirec (FR)**

(74) Mandataire: **Michelet, Alain et al**
**Cabinet HARLE et PHELIP**
**14-16, rue Ballu**
**75009 Paris (FR)**

(56) Documents cités:
| | |
|---|---|
| EP-A1- 1 947 065 | WO-A1-01/38244 |
| US-A- 4 087 266 | US-A1- 2002 122 645 |
| US-A1- 2004 156 401 | US-A1- 2006 029 344 |
| US-B1- 6 408 652 | |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Le domaine de l'invention concerne les fibres optiques multi gaine à coeur dopé terres rares utilisées dans le domaine du laser à fibres ou de l'amplification. Plus précisément l'invention concerne un procédé de fabrication de fibre monomode de type double gaine à coeur dopé terres rares ainsi que des fibres optiques double gaine à coeur monomode dopé terres rares.

Les fibres dopées terres rares sont utilisées depuis les années 1990 pour l'amplification optique. Le coeur d'une fibre amplificatrice est généralement dopé par des ions terres rares aptes à amplifier un signal lumineux à une longueur d'onde spécifique en présence d'une onde lumineuse dite de pompe à une autre longueur d'onde. Une fibre dite double gaine est une fibre comportant deux gaines concentriques autour du coeur de manière à guider une onde de pompe à l'intérieur de la gaine entourant le coeur et à coupler l'onde de pompe dans le coeur de la fibre. Les indices de réfraction du coeur et des deux gaines présentent généralement deux paliers d'indice de réfraction de manière à guider le signal dans le coeur et la pompe dans la première gaine avec un recouvrement du coeur.

Les fibres double gaine sont généralement fabriquées par fusion étirage à partir d'une préforme à fibrer ayant une structure en coupe de dimensions homothétiques à celles de la fibre. Le coeur de la préforme est déposé à l'intérieur d'un tube de silice par un dépôt en phase gazeuse ou en phase liquide qui est ensuite vitrifié. Puis, on manchonne le premier tube de silice par un second tube dont l'indice de réfraction est nettement inférieur à celui de la silice. Après fusion étirage le tube de silice forme la première gaine entourant le coeur dopé de la fibre et le second tube forme une seconde gaine entourant la première gaine. La première gaine en silice forme ainsi un guide multimode pour guider la pompe le long de la fibre double gaine. La pompe est ainsi utilisée de façon distribuée.

Le document US 6408652 décrit un procédé de fabrication d'une fibre d'amplification optique comprenant un dépôt en phase gazeuse d'au moins une couche de coeur à l'intérieur d'un tube de quartz, l'imprégnation d'une couche de coeur par une solution contenant un métal des terres rares, et la réduction du diamètre du tube de quartz par chauffage.

Le document WO0138244 décrit une fibre optique multigaine à coeur monomode de faible diamètre

On distingue deux types principaux de fibres double gaine : les fibres dites classiques et les fibres dites Air-Clad ou à gaine d'air.

Dans les fibres classiques, la seconde gaine formant le guide multimode est une gaine entourant complètement la première gaine et ayant un indice de réfraction inférieur à celui de la silice, par exemple un acrylate fluoré. La technologie double gaine a été développée dans le milieu des années 1990.

Dans les fibres Air-Clad, la seconde gaine est composée de trous d'air disposés en anneau autour de la première gaine, cette seconde gaine ayant un indice effectif très bas permet de confiner la pompe dans la première gaine multimode. Le brevet US 5,907,652 décrit une fibre Air-clad ayant une double gaine pour guider une onde de pompe et amplifier un signal se propageant dans le coeur dopé de la fibre.

Il existe une pluralité de techniques d'incorporation de terres rares lors de la fabrication du coeur. On peut citer l'incorporation en phase gazeuse par utilisation de terres rare chélatées, l'utilisation de nanoparticules ou bien l'incorporation de terres rares par voie liquide dans un matériau poreux. Dans notre cas, le matériau poreux est fabriqué en utilisant la technique MCVD à basse température. On incorpore à ce stade la plupart des dopants à l'exception notable de l'aluminium. Le poreux est ensuite imprégné d'une solution contenant des sels de terres-rares et éventuellement d'aluminium.

Puis le poreux est vidé, séché et vitrifié sur un banc MCVD. La suite du procédé MCVD est connue : le tube est rétreint sur lui même et on obtient une préforme totalement fermée. Quel que soit le type de fibre multigaine, le coeur est généralement réalisé dans un tube de silice synthétique.

L'indice de réfraction du coeur dépend de la teneur en terre rares (Er, Yb, Er+Yb, Tm, Tm+Ho, etc) et de celle du ou des co-dopants de la silice (Al, P, P+Al, Ge, etc ou toute combinaison). Le co-dopant est utilisé pour modifier la spectroscopie des ions terres rares. En effet, le co-dopant modifie l'environnement électronique des ions terres rares et donc les sections efficaces d'émissions et d'absorption.

La méthode la plus directe pour augmenter la capacité d'une fibre amplificatrice à produire des puissances crêtes importantes est d'augmenter le diamètre du mode fondamental se propageant dans le coeur de la fibre. Toutefois, la difficulté est alors de conserver une propagation monomode dans le coeur. Une fibre est caractérisée par sa fréquence normalisée V définie par :

$$V = a.k_0 \sqrt{(n1^2 - n2^2)} \qquad (I)$$

où $a$ représente le rayon du coeur, $k_0$ le nombre d'onde en espace libre ($k_0 = 2.\pi/\lambda$), $n_1$ l'indice de réfraction du coeur et $n_2$ l'indice de réfraction de la gaine. Si le paramètre V est inférieur à 2.405, la fibre est monomode. Lorsqu'on augmente le rayon a du coeur il faut alors diminuer proportionnellement le saut d'indice ($\Delta = n_1 - n_2$) entre le coeur et la gaine. Pour un rayon de coeur a de l'ordre de 25 $\mu$m, on arrive à des sauts d'indices qui sont inférieurs à ceux que sait garantir l'industrie actuelle des fibres optiques. Les fibres classiques à saut d'indice et à gros diamètre de coeur sont donc généralement multimode. Le nombre de modes supporté par une fibre multimode est donné par le nombre M :

$$M = \frac{1}{2}(\frac{\pi d}{\lambda} NA)^2 \qquad (II)$$

où $NA$ est l'ouverture numérique de la fibre et d est le diamètre du coeur de la fibre (d=2a). Le saut d'indice $\Delta$ est relié à l'ouverture numérique $NA$ et à l'indice du coeur $n_1$ selon la formule suivante :

$$\Delta = \frac{1}{2}(\frac{NA}{n_1})^2 \qquad (III)$$

Par ailleurs, lorsque l'on cherche une forte absorption de la pompe, on doit augmenter la teneur en terres rares. On doit en même temps augmenter la teneur en co-dopants afin de limiter l'apparition d'agrégats contre productifs dans l'amplification ou l'émission laser et qui peuvent même induire un photonoircissement néfaste à la durée de vie des lasers. Cependant, les réfractivités molaires des principaux éléments considérés étant positives, l'indice de réfraction du coeur augment vite avec le taux de dopage. Or, comme l'indiquent les formules (I) et (III), une augmentation de l'indice de réfraction $n_1$ du coeur se traduit par une augmentation de l'ouverture numérique et du paramètre V du coeur. Pour que le coeur reste monomode à la longueur d'onde d'utilisation, on doit alors diminuer la taille du coeur actif (via les formules classiques et le paramètre V) et donc l'absorption puisque le lien entre l'absorption monomode et multimode est uniquement un rapport de surface.

Il est possible d'ajouter à la composition du coeur des éléments tel que le Bore ou le Fluor contribuant réduire l'indice de réfraction du coeur. Mais en pratique l'ajout de ces composés est rarement réalisable dans les niveaux considérés. Il est donc difficile d'augmenter la capacité d'amplification d'une fibre optique double gaine tout en conservant une propagation monomode dans le coeur de la fibre.

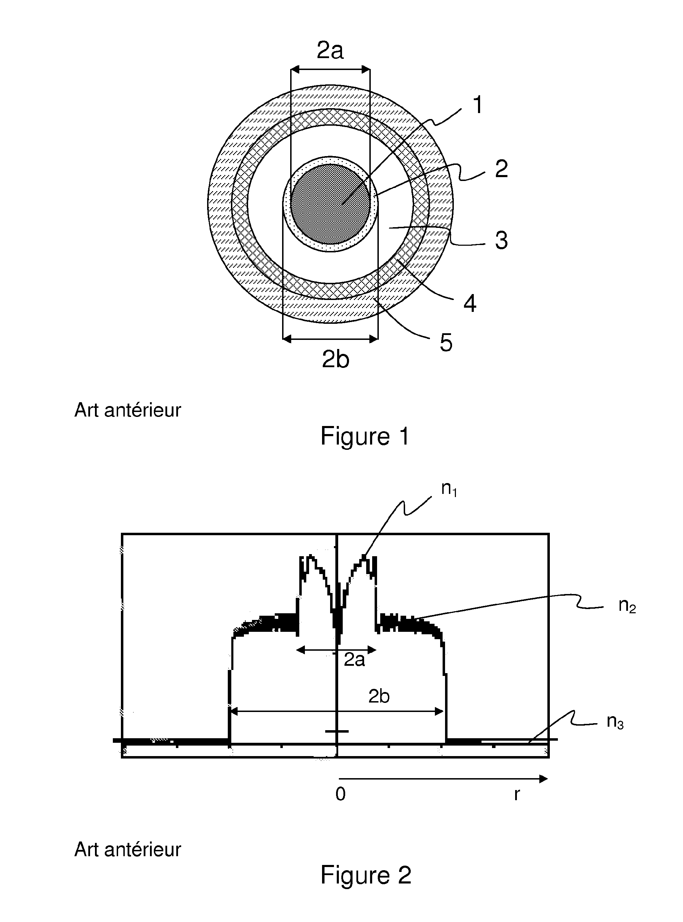

Une solution pour réduire l'ouverture numérique du coeur consiste à réaliser une fibre à triple gaine, telle que représentée schématiquement en coupe sur la Figure 1. Lors de la fabrication de la préforme on dépose dans le tube de dépôt en silice synthétique une gaine passive (dopée au Germanium par exemple) ayant un indice de réfraction supérieur à celui de la silice qui formera une première gaine 2 située entre le coeur dopé 1 et la gaine de silice 3. La gaine passive 2 est aussi appelée piédestal, par exemple dans le brevet US7,050,686 car le profil d'indice de la fibre montre que cette gaine forme un piédestal entre l'indice élevé du coeur 1 et l'indice de la silice de la gaine 3 guide de pompe multimode. Pour permettre de guider la pompe, la gaine 3 est elle-même entourée d'une gaine 4 de silice dopée bas indice. L'ensemble peut être revêtu d'un polymère 5 de protection. Le piédestal permet de réduire l'ouverture numérique effective et le paramètre V du coeur qui peut ainsi rester monomode. La figure 2 représente un profil d'indice d'une fibre triple gaine de l'art antérieur. D'une part, l'indice $n_2$ du piédestal entourant le coeur est limité par rapport à l'indice de la silice pure, d'autre part la section du piédestal (2b) est également limitée.

Cependant la technique de fibre à triple gaine ou à piédestal présente des inconvénients du point de vue optique pour la pompe et pour le signal. Tout d'abord, le piédestal 2 est lui-même un guide multimode circulaire dans le guide 3 multimode de pompe et du fait de sa symétrie circulaire, une partie de la pompe peut être transmise dans des modes ne recouvrant pas le coeur 1 dopé. Une partie de la pompe n'est donc pas utilisée d'où une perte d'efficacité. Ensuite, le piédestal 2 n'est pas un niveau infini d'indice, si bien qu'il se produit des couplages de l'énergie du ou des modes propagés dans le coeur vers ceux pouvant se propager dans le piédestal lui même et ce, à la faveur de perturbations liées par exemple aux courbures de la fibre. Ces couplages dégradent la qualité de faisceau, ce qui se traduit par un coefficient $M^2$ élevé, le coefficient $M^2$ mesurant l'écart par rapport à un faisceau gaussien. En outre, les fibres triple gaine entraînent des difficultés de soudure. Enfin, le piédestal est une zone difficile à vider de la pompe résiduelle ce qui pose un problème pour extraire le faisceau vers des fibres passives ou vers un collimateur.

De plus, la technique de dépôt du piédestal est en pratique peu compatible avec la fabrication du coeur dopé par la méthode dite de dopage en solution selon laquelle un tube de silice à l'intérieur duquel on a déposé une couche de silice dopée poreuse, est rempli d'une solution contenant des sels de terres rares de manière à imprégner la couche de poreux qui est ensuite vitrifiée. Tout d'abord, la gaine destinée à former le piédestal est déposée par la technique MCVD à l'intérieur du tube de silice, puis la couche de poreux est déposée concentriquement à la gaine du piédestal et ensuite le tube est refroidi à température ambiante pour l'étape d'imprégnation du coeur par dopage en solution. Or, plus l'indice de la gaine piédestal est élevé par rapport à celui du tube de silice (par exemple pour un indice de réfraction du piédestal supérieur de $8 \times 10^{-3}$ à celui de la gaine de silice), plus cette gaine piédestal est fragile. En raison de la forte différence entre les coefficients thermiques d'expansion du piédestal et du tube de silice, la gaine est soumise à de fortes contraintes lors du refroidissement et le moindre choc ou la moindre amorce de rupture (remontées de suie par exemple) peut provoquer des fissures ou l'éclatement de cette gaine.

Une autre contrainte est la limitation pratique à la section déposée de gaine piédestal. Du fait de la technique de dépôt MCVD, la quantité de matière pouvant être déposée est en pratique limitée au maximum de 100 à 200 $mm^2$, ce qui limite la section du piédestal dans la fibre.

Une troisième contrainte est posée par le guide formé par le piédestal lui même ; plus l'ouverture numérique du piédestal devient grande, plus il est difficile de faire fuir la pompe résiduelle propagée dans le piédestal sans entraîner un perte du signal propagé dans le coeur. Cette technique de piédestal n'est donc pas pertinente pour les fibres à forte ouverture numérique initiale, typiquement ayant une ouverture numérique supérieure à environ 0,18.

Un des buts de l'invention est de proposer un procédé de fabrication d'une fibre à forte amplification, à la fois de grand diamètre de coeur et monomode pour le coeur, et ayant une gaine guide de pompe multimode apte à coupler efficacement la pompe dans le coeur. Un autre but de l'invention est de proposer un procédé de fabrication permettant de fabriquer une fibre double gaine ayant une première gaine dont la section a une grande surface.

Enfin, un des buts de l'invention est de proposer une fibre amplificatrice, monomode de coeur et de grand diamètre de coeur et ayant une gaine guide de pompe multimode apte à coupler efficacement la pompe dans le coeur. Un autre but est de proposer une fibre multi gaine facile à souder. Encore un autre but est de proposer une fibre amplificatrice à maintien de polarisation.

A cet effet, l'invention concerne premièrement un procédé de fabrication d'une fibre optique multi gaine à coeur dopé comprenant les étapes suivantes :

a) On dépose une première couche de gaine à l'intérieur d'un premier tube porteur ;

b) on dépose une seconde couche de silice poreuse à l'intérieur dudit premier tube porteur portant la première couche de gaine ;

c) on imprègne la couche de silice poreuse par une solution comprenant des sels de terre rare de manière à obtenir une couche de silice dopée terre rare ;

d) on vitrifie la couche de sillice dopée terre rare ;

e) On rétreint le tube ainsi obtenu à l'étape d) pour former un barreau comprenant un coeur plein dopé terre rare entouré de la première couche de gaine, elle-même entourée du tube porteur ;

f) On enlève la partie externe du premier tube porteur pour obtenir le coeur dopé du barreau entouré de la première couche de gaine ;

g) On dépose à l'intérieur d'un autre tube porteur une autre couche de gaine en un matériau ayant un indice de réfraction inférieur à l'indice de réfraction du coeur dopé ;

h) On manchonne le coeur dopé au moyen dudit tube porteur ;

i) On élimine la partie externe dudit tube porteur en s'arrêtant à ladite couche de gaine déposée respectivement à l'intérieur dudit tube porteur ;

j) On répète les étapes g) à i) N fois, avec N >1, jusqu'à l'obtention d'une première gaine formée de l'empilement desdites couches de gaine entourant le coeur de manière à ce que la section de la première gaine ait un diamètre 2B prédéterminé ;

k) On manchonne la préforme obtenue à l'étape précédente par un manchon ayant un indice de réfraction effectif inférieur à celui de la première gaine de manière à former une seconde gaine ;

l) on effectue la fusion et l'étirage de la préforme obtenue à l'étape précédente pour obtenir une fibre multi gaine à coeur dopé monomode et à gaine guide de pompe multimode.

Selon un mode de réalisation particulier, la différence $\Delta$ entre l'indice de réfraction du coeur de la fibre et l'indice de réfraction de la première gaine de la fibre est comprise entre $0,5 \times 10^{-3}$ et $5 \times 10^{-3}$.

Selon un autre mode de réalisation particulier, l'indice de réfraction de la première gaine de la fibre est supérieur à l'indice de réfraction de la silice pure d'au moins $5 \times 10^{-3}$.

Selon un mode de réalisation préféré, le matériau du coeur est de la silice dopée d'au moins un élément terre rare parmi l'erbium, l'ytterbium, le thulium, l'holmium ou d'un mélange de ces éléments terres rares tels que Er-Yb ou Tm-Ho, et codopée d'un élément choisi parmi l'aluminium, le phosphore, le germanium, ou d'un mélange de ces codopants.

Selon un mode de réalisation préféré, le matériau de la première gaine est en silice dopée au Germanium et le manchon pour former la seconde gaine est un tube de silice non dopée.

Selon un autre mode de réalisation, le manchon pour former la seconde gaine comprend des capillaires aptes à former une fibre de type air-clad.

Selon un autre mode de réalisation particulier, les couches formant la couche de gaine ont des indices de réfraction prédéterminés de manière à ce que la couche de gaine ait un profil d'indice du type en V, en W ou en M.

Selon un autre mode de réalisation particulier le procédé de fabrication comprend les étapes supplémentaires suivantes avant l'étape l) de fusion étirage pour obtenir une fibre à maintien de polarisation :

- Réalisation dans la première gaine de la préforme finale de perçages s'étendant longitudinalement par rapport à l'axe de la préforme ;
- Insertion dans les perçages de barreaux de contrainte en un matériau ayant un coefficient thermique d'expansion différent de celui de la première gaine.

L'invention concerne également une fibre optique multi gaine à coeur dopé pour amplificateur à fibre ou pour laser à fibre, ladite fibre comprenant un coeur dopé d'au moins un élément terre rare, ayant une section circulaire de diamètre 2a et d'indice de réfraction $n_c$ à une longueur d'onde d'amplification $\lambda_1$, une première gaine multimode guide de pompe entourant complètement ledit coeur, ladite première gaine ayant un indice de réfraction $n_{G1}$ et une seconde gaine de confinement de pompe, ladite seconde gaine entourant la première gaine et ayant un indice de réfraction $n_{G2}$, les indices de réfraction étant tels que :

$$n_c > n_{G1} > n_{G2}$$

Selon l'invention :

- l'indice de réfraction $n_{G1}$ de la première gaine est supérieur d'au moins $5x10^{-3}$ relativement à l'indice de réfraction de la silice pure,
- la différence $\Delta$ entre l'indice de réfraction du coeur $n_c$ et l'indice de réfraction de la première gaine $n_{G1}$ est comprise entre $0,5x10^{-3}$ et $5x10^{-3}$, et
- le diamètre 2a du coeur est prédéterminé pour limiter le paramètre V du coeur à une valeur inférieure à 2,405 de manière à ce que le coeur soit monomode à la longueur d'onde $\lambda_1$.

Selon un mode de réalisation particulier de l'invention, le diamètre 2a du coeur dopé de la fibre est compris entre 40 et 100 microns et la première gaine multimode guide de pompe a une section dont le diamètre 2b est compris entre 200 et 400 microns.

Selon un mode de réalisation particulier de l'invention, la première gaine comprend au moins un élément longitudinal de contrainte apte à maintenir la polarisation d'un signal se propageant dans le coeur de ladite fibre.

Selon un mode de réalisation particulier de l'invention, la première gaine comprend au moins un cylindre de section annulaire en matériau absorbant.

Selon un mode de réalisation particulier, la seconde gaine est une gaine en silice, en silice dopée bas indice ou une gaine de type air-clad.

Selon un mode de réalisation préféré de l'invention, le coeur de la fibre est en silice dopée d'au moins un élément terre rare parmi l'erbium, l'ytterbium, le thulium, l'holmium ou d'un mélange de ces éléments terres rares tels que Er-Yb ou Tm-Ho, et codopé d'un élément choisi parmi l'aluminium, le phosphore, le germanium, ou d'un mélange de ces codopants et la première gaine est en silice dopée d'un élément apte à augmenter son indice de réfraction par rapport à l'indice de réfraction de la silice pure, tel que le germanium.

La présente invention concerne également les caractéristiques qui ressortiront au cours de la description qui va suivre et qui devront être considérées isolément ou selon toutes leurs combinaisons techniquement possibles.

Cette description, donnée à titre d'exemple non limitatif, fera mieux comprendre comment l'invention peut être réalisée en référence aux dessins annexés sur lesquels :

- la figure 1 représente schématiquement une vue en coupe d'une fibre optique multigaine selon l'art antérieur ;
- la figure 2 représente un profil d'indice du coeur et du piédestal d'une fibre optique multigaine selon l'art antérieur ;
- la figure 3 représente schématiquement une vue en coupe d'une fibre optique double gaine selon l'invention ;
- la figure 4 représente schématiquement un profil d'indice d'une fibre optique double gaine selon l'invention ;
- la figure 5 représente schématiquement une vue en coupe d'une préforme pour fibre amplificatrice à différentes étapes de sa fabrication selon un mode de réalisation du procédé de l'invention
- la figure 6 (6A-6G) représente schématiquement différents profils d'indice de la première gaine d'une fibre optique selon différents modes de réalisation de l'invention.

Nous décrivons maintenant en détail un procédé de fabrication d'une préforme à fibrer pour une fibre optique double gaine à coeur dopé et dont la gaine guide de pompe multimode a un indice de réfraction élevé comparé à la silice. Même si l'intérêt d'une telle fibre a été théoriquement envisagée, les techniques de fabrication de préforme ne permettent pas jusqu'à présent de fabriquer une première gaine d'indice élevé et de section étendue.

Dans l'art antérieur, la préforme initiale d'une fibre est un tube de silice, généralement en silice ultrapure de qualité optique. La fabrication du coeur et de gaines ayant un indice de réfraction supérieur ou inférieur à celui de la silice est obtenue par dépôt de couches dopées à l'intérieur du tube de silice, qui peut ensuite être manchonné par un autre tube de silice comportant un autre dépôt pour former la gaine de confinement d'une fibre multigaine. Comme mentionné plus haut, les épaisseurs des couches d'indice différent de celui de la silice sont cependant limitées par les techniques de dépôt. La gaine 3 multimode guide de pompe, telle que représentée sur la figure 1, est donc en pratique dans les fibres antérieures une gaine de silice pure, dont l'indice de réfraction est égal à 1,45.

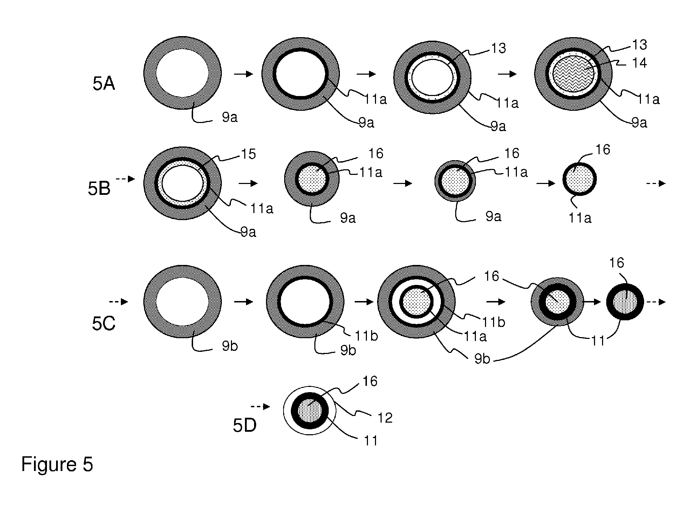

Le procédé de fabrication de l'invention (*cf* Figures 5A-5D) utilise des tubes pour la préforme initiale et pour des manchons, appelés dans la suite de ce document, tubes porteurs. Un tube porteur peut être en silice synthétique, mais n'est pas nécessairement un tube de silice ultrapure. Un tube porteur peut aussi être un tube de silice dopée de qualité non optique, mais dont les propriétés sont plus proches de celles de la silice dopée à fabriquer pour le guide multimode, en particulier dont le coefficient d'expansion thermique est proche de celui recherché pour le guide multimode. Un tel tube n'est habituellement pas destiné à la fabrication de fibre optique, mais nous verrons plus loin que les différents tubes porteurs utilisés ne font pas partie de la préforme finale. Le matériau du tube porteur doit être compatible avec les températures classiques de dépôt et de rétreint et la viscosité du matériau du tube porteur doit être compatible avec la phase de rétreint. Un tube porteur doit avoir une très bonne géométrie pour obtenir un coeur de géométrie circulaire. Un tube porteur peut toutefois être un tube bas coût.

La première étape (*cf* Fig. 5A-5B) est la fabrication du coeur de la préforme à l'intérieur d'un premier tube porteur 9a par la technique du poreux. Tout d'abord, on prend un premier tube porteur 9a (*cf* Fig. 5A). On dépose par MCVD une première couche 11a de composition adaptée pour servir de première couche de gaine avec un indice de réfraction inférieur à celui du coeur dopé mais supérieur à celui de la silice pure. Dans un exemple préféré de réalisation, on dépose une couche de gaine 11a en silice dopée au Germanium à l'intérieur du tube 9a. On dépose ensuite par MCVD, à l'intérieur du tube 9a revêtu de la première couche 11a, une couche de silice poreuse 13. Ensuite le tube est refroidi à température ambiante pour l'étape d'imprégnation du coeur par dopage en solution : on remplit le tube refroidi d'une solution 14 contenant des sels de terres rares de manière à imprégner la couche 13 de silice poreuse. Puis le tube 9a est vidé, séché, et la couche poreuse est vitrifié sur un banc MCVD. On obtient alors un tube contenant deux couches concentriques : une couche 15 de silice dopée terres rares entourée d'une première couche de gaine 11a. Enfin, le premier tube porteur 9a est rétreint sur lui-même pour former une préforme complètement fermée comprenant un coeur 16 dopé qui est à ce stade entouré d'une première couche mince de gaine 11 a, le coeur 16 et la première couche de gaine 11 a étant enveloppés par le premier tube porteur 9a. Cependant, l'épaisseur de couche de gaine 11a qui peut être déposée au cours d'une étape est limitée.

Puis la partie extérieure du premier tube porteur 9a est enlevée, soit chimiquement par gravure à l'acide fluorhydrique, soit mécaniquement par rectification externe dite centerless. On obtient à l'issue de cette étape (*cf* Fig. 5B) un barreau comprenant un coeur 16 dopé entouré d'une première couche 11 a de gaine.

On poursuit alors la fabrication de la première gaine de la préforme. Plus précisément, la fabrication de la première gaine de la préforme s'effectue en plusieurs étapes successives reposant sur la technique du tube porteur. De manière itérative (cf Fig. 5C), on prend un autre tube 9b, on dépose une nouvelle couche de gaine 11 b, par exemple en silice dopée au Germanium, à l'intérieur du tube 9b. La couche de gaine 11 b peut, selon différents modes de réalisation détaillés plus loin, être dans un matériau identique à celui de la première couche 11a, ou dans un matérieur différent. Puis, on manchonne le barreau de coeur 16 entouré de la première couche de gaine 11 a, par le tube porteur 9b comprenant la seconde couche de gaine 11 b. Comme décrit plus haut, on élimine le tube porteur 9b par une attaque chimique ou mécanique depuis sa périphérie jusqu'à la couche de gaine 11 b.

A ce stade, on obtient ainsi un barreau comprenant le coeur 16 dopé entouré d'un empilement concentrique constitué de la première couche de gaine 11a et de la seconde couche de gaine 11 b.

De manière itérative (non représentée), on prend un autre tube 9c, on dépose une nouvelle couche 11 c, par exemple en silice dopée au Germanium, à l'intérieur du tube 9c, puis on manchonne le barreau de coeur entouré des premières couches de gaine par le tube porteur 9c comprenant la couche de gaine 11 c. On élimine chimiquement ou mécaniquement le tube porteur 9c jusqu'à la couche de gaine 11 c.

Le dépôt de couches de gaine 11 a, 11 b, 11 c... successives est répété pour obtenir par empilement de ces couches 11 a, 11 b, 11 c... une première gaine multimode 11 dopée Germanium à fort indice de réfraction et de section 2B importante (cf Fig. 5C). Le rapport entre le diamètre 2A de la section du coeur 16 et le diamètre 2B de la section de la première gaine 11 est déterminé suivant le design de la fibre, mais en pratique le rapport *B/A* est supérieur à une valeur minimale de 2.

On fabrique ensuite la gaine de confinement 12 entourant la première gaine 11 de la préforme (*cf* Fig. 5D). La gaine 12 de confinement de la pompe est en matériau d'indice de réfraction inférieur à celui de la gaine 11 multimode haut indice. La gaine 12 de confinement peut être une simple gaine de silice, éventuellement fluorée. Selon un autre mode de réalisation, la gaine 12 de confinement peut être une gaine en acrylate. Selon encore un autre mode de réalisation, la gaine 12 de confinement peut être une gaine de type Air-Clad.

On obtient ainsi une préforme à fibrer (Fig. 5D). Le nombre de tubes porteurs (9a, 9b, 9c...) utilisés pour fabriquer la préforme à fibrer est compris entre 2 à 10 tubes.

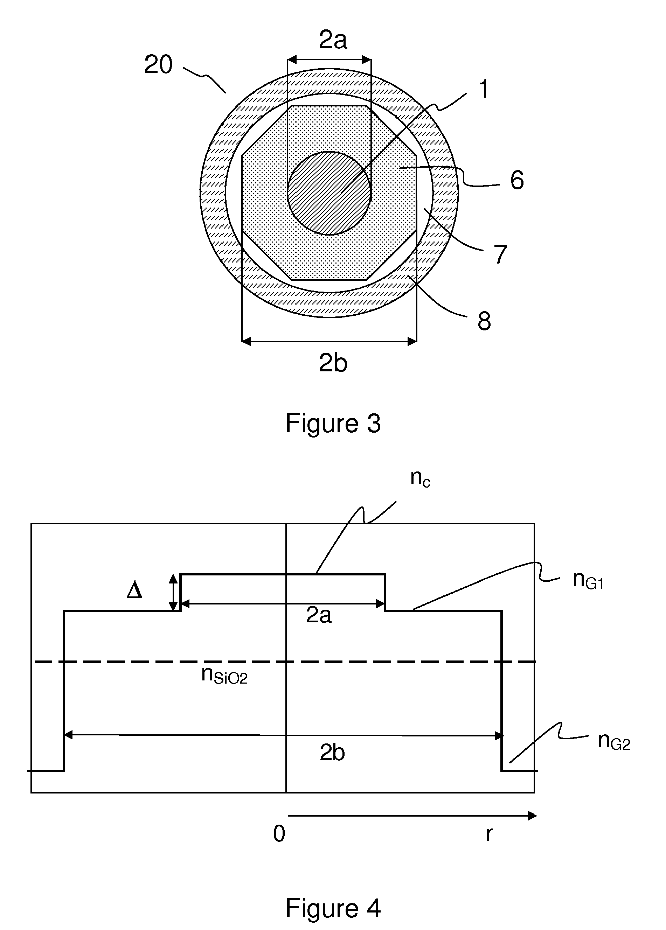

La fibre 20 multi gaine à coeur dopé est obtenue par des opérations classiques de fusion étirage de la préforme à fibrer, la fibre 20 étant éventuellement revêtue d'un revêtement 8 polymère de protection (*cf* Fig 3).

La figure 3 représente schématiquement une vue en coupe d'une fibre 20 selon l'invention. La fibre 20 ainsi obtenue comprend un coeur 1 dopé, une première gaine 6 d'indice de réfraction élevé comparé à la silice pure et de section étendue et une seconde gaine 7 formant ainsi une gaine multimode guide de pompe. La première gaine 6 est formée d'un empilement concentrique de couches de gaine. Selon un mode de réalisation préféré, la première gaine 6 a une section de forme polygonale, par exemple octogonale, de manière à améliorer le couplage de la pompe dans le coeur de la fibre.

Le procédé de l'invention permet ainsi de fabriquer une fibre optique 20 à coeur dopé et à gaine multimode guide de pompe, dont la première gaine 6 entourant le coeur présente à la fois une grande section transverse et un indice de réfraction élevé par rapport à de la silice pure, tout en restant inférieur à celui du coeur 1.

On peut notamment obtenir (après plusieurs étapes d'itération par tubes porteurs lors de la fabrication de la préforme) une fibre 20 de très grand diamètre de coeur (40 à 100 $\mu$m) pour de grands diamètres de gaine (de 200 à 400$\mu$m et plus) tout en conservant un coeur 1 monomode.

La figure 4 représente schématiquement le profil d'indice d'une fibre 20 selon un mode de réalisation de l'invention. Le coeur 1 a un indice de réfraction $n_c$ supérieur à l'indice de réfraction $n_{G1}$ de la première gaine 6. Toutefois, la différence $\Delta$ entre l'indice de réfraction $n_c$ du coeur 1 et l'indice de réfraction $n_{G1}$ de la première gaine 6 peut être relativement faible, $\Delta$ étant de préférence compris entre $0,5 \times 10^{-3}$ et $5,0 \times 10^{-3}$. La première gaine 6 a un indice de réfraction $n_{G1}$ supérieur à l'indice de réfraction de la silice pure. La seconde gaine 7 a un indice de réfraction $n_{G2}$ inférieur à l'indice de réfraction $n_{G1}$ de la première gaine 6, de manière à guider l'onde de pompe se propageant dans la première gaine 6. L'indice de réfaction $n_{G2}$ peut être beaucoup plus faible que l'indice de réfraction $n_{SiO2}$ de la silice pure.

La structure double gaine de la fibre 20 de l'invention, associée à une première gaine 6 d'indice de réfraction $n_{G1}$ élevé comparativement à la silice pure, permet de couvrir une gamme très étendue de rapport de section coeur/gaine (a/b) tout en conservant un coeur monomode. En effet, dans une fibre à piédestal de l'art antérieur, l'indice du piédestal 2 ne peut guère dépasser les $9 \times 10^{-3}$ par rapport à l'indice de la gaine 3 multimode guide de pompe, c'est-à-dire par rapport à la silice pure. Un coeur 1 dopé Erbium Ytterbium classique peut avoir une ouverture numérique (ON) de 0.21 ce qui correspond à un indice de réfraction $n_1$ du coeur 1 situé à environ $15 \times 10^{-3}$ au dessus de l'indice de réfraction de la silice. La différence d'indice de réfraction entre le coeur 1 et le piédestal 2 est alors de $6 \times 10^{-3}$ si bien que l'ouverture numérique effective du coeur après piédestal est limitée à 0.13 ce qui ne permet pas de fabriquer une fibre à coeur monomode de plus de 9 $\mu$m de section de coeur.

Au contraire, selon l'invention il est possible de fabriquer une fibre 20 dont l'indice de la première gaine 6 est supérieur de $10 \times 10^{-3}$ par rapport à l'indice de la silice, sans problème de fabrication dû à des différences de coefficient d'expansion thermique trop élevées. De plus, il est possible de fabriquer une fibre 20, dont l'indice $n_{G2}$ de la seconde gaine 7 est inférieur par exemple de $70 \times 10^{-3}$ relativement à l'indice de réfraction de la silice pure. Il devient alors possible de réaliser une fibre conformément à l'invention permettant de couvrir toute la gamme de rapport de section coeur/gaine (a/b), si bien qu'il est possible de fabriquer une fibre monomode de coeur ayant une section de coeur a très étendue.

Selon un autre mode de réalisation particulier, lors des étapes itératives de dépôt de couches haut indice dans un tube porteur et manchonnage, on peut appliquer des techniques connues par ailleurs de modification d'indice de la silice pour modifier l'indice du guide multimode. On peut ainsi intercaler des couches dopées d'indices adaptés ou pas au niveau global de la gaine multimode et dopées ou pas permettant de réaliser des fonctions d'absorption, de filtrage ou de modification du guidage.

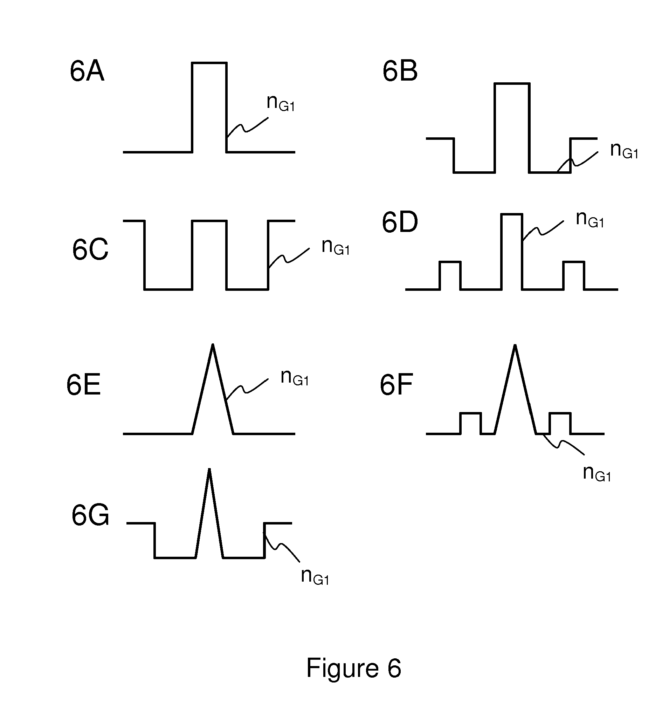

Selon un autre mode de réalisation particulier de l'invention, on sélectionne les matériaux des couches 11 a, 11 b, 11 c de manière à ce que la gaine 6 guide de pompe de la fibre ait un profil d'indice en V, en W ou en M ou tout autre profil déterminé. Les figures 6A-6G représentent schématiquement différents profils d'indice $n_{G1}$ de la première gaine entourant le coeur en fonction de la distance r au coeur, en considérant la direction suivant r positif. Parmi les différents profils représentés, on trouve notamment un profil en V, un profil en W, un profil en M, ainsi que des combinaisons de ces différents profils.

Un mode de réalisation particulier concerne un procédé de fabrication d'une fibre amplificatrice à maintien de polarisation. La préforme est fabriquée selon le procédé décrit plus haut, pour obtenir une préforme comprenant un coeur dopé entouré d'une gaine multimode de forte section dont l'indice de réfraction est inférieur à celui du coeur mais supérieur à celui de la silice pure. La gaine multimode peut être ensuite être percée longitudinalement pour y insérer des barreaux de contrainte de manière à obtenir après fibrage une fibre optique amplificatrice à maintien de polarisation de type Panda par exemple. La gaine multimode de la fibre étant large, il est possible de réaliser des perçages sans risque pour le coeur.

Le procédé de fabrication basé sur l'utilisation de tubes porteurs permet de résoudre le problème des contraintes thermomécaniques entre les étapes de dépôt de la couche de gaine à température élevée puis de refroidissement. L'invention permet de réaliser des fibres dont l'indice de la gaine entourant le coeur est élevé relativement à la silice, ce qui n'était auparavant pas réalisable du fait des différences de coefficient thermique d'expansion entre une gaine haut indice et un tube de silice. De plus, la technique de dépôts multiples de couches de gaine dans une pluralité de tubes porteurs permet de s'affranchir de la limitation de la section de gaine haut indice déposée.

Grâce à cette technique, on peut facilement obtenir une fibre double ayant une gaine 6 multimode guide de pompe de grande section et d'indice de réfraction élevé par rapport à l'indice de la silice pure.

Une telle gaine de guide de pompe permet d'obtenir une faible ouverture numérique de coeur même pour un coeur fortement dopé et/ou de forte section transverse.

Considérons par exemple une fibre à coeur dopé Erbium-Ytterbium, dont l'indice de coeur $n_c$ est situé à $15 \times 10^{-3}$ au dessus de l'indice de la silice. Selon la technique classique, avec une première gaine de silice, l'ouverture du coeur est égale à 0,21 ; avec un piédestal dont l'indice est situé à $6 \times 10^{-3}$ au dessus de l'indice de la silice, l'ouverture numérique du coeur devient 0.13 ce qui ne permet pas d'atteindre un coeur monomode de plus de 9 microns de section. En utilisant la technique du tube porteur de l'invention, pour un même coeur dopé Erbium-Ytterbium ayant un indice de coeur de $15 \times 10^{-3}$ au dessus de l'indice de la silice, on peut par exemple fabriquer une première gaine dont le niveau d'indice réfraction $n_{G1}$ est supérieur de $13x10^{-3}$ par rapport à l'indice de la silice, ce qui permet d'obtenir une fibre monomode de coeur d'ouverture numérique égale à 0.08 pour un diamètre de coeur égal à 15 microns, ce qui représente un gain en surface supérieur à 2,5 par rapport à la fibre de 9 microns de coeur.

Considérons maintenant une fibre à gaine de silice et à coeur dopé Erbium et codopé Aluminium, dont l'indice l'indice de coeur est de $23x10^{-3}$ au dessus de l'indice de la silice. Avec une première gaine de silice, cette fibre présente une ouverture numérique de l'ordre de 0.26 ce qui limite la section du coeur à 4 microns pour que le coeur de cette fibre soit monomode. En utilisant la technique du tube porteur de l'invention, pour un même coeur dopé Erbium et codopé Aluminium, ayant un indice de coeur de $23x10^{-3}$ au dessus de l'indice de la silice, on peut par exemple fabriquer une première gaine dont le niveau d'indice réfraction $n_{G1}$ est supérieur de $20x10^{-3}$ par rapport à l'indice de la silice, ce qui permet d'obtenir une fibre monomode de coeur, d'ouverture numérique égale à 0.10 pour un diamètre de coeur égal à 11 microns. Passer d'une fibre monomode de 4 microns de section de coeur à une fibre monomode de 11 microns de section de coeur représente un gain proche de huit en rapport de surface.

Sans augmenter le taux de dopage du coeur en ions terres rares, les fibres de l'invention permettent d'augmenter le diamètre du coeur monomode et ainsi d'augmenter la puissance optique délivrée.

Une fibre double gaine conforme à l'invention permet de réduire les effets néfastes, du point de vue optique, du piédestal en agrandissant le piédestal de manière à façonner l'ensemble de la gaine multimode dans la gaine dopée par exemple au germanium.

Le procédé permet également de fabriquer une fibre amplificatrice double gaine à maintien de polarisation.

**Revendications**

1. Procédé de fabrication d'une fibre optique multi gaine à coeur dopé comprenant les étapes suivantes :

a) On dépose une première couche de gaine (11a) à l'intérieur d'un premier tube porteur (9a) ;
b) on dépose une seconde couche de silice poreuse (13) à l'intérieur dudit premier tube porteur (9a) portant la première couche de gaine (11a);
c) on imprègne la couche de silice poreuse (13) par une solution (14) comprenant des sels de terre rare de manière à obtenir une couche (15) de silice dopée terre rare ;
d) on vitrifie la couche (15) de sillice dopée terre rare ;
e) on rétreint le tube ainsi obtenu à l'étape d) pour former un barreau comprenant un coeur plein (16) dopé terre rare entouré de la première couche de gaine (11a), elle-même entourée du tube porteur (9a) ;
f) On enlève la partie externe du premier tube porteur (9a) pour obtenir le coeur dopé (16) du barreau entouré de la première couche de gaine (11a);
g) On dépose à l'intérieur d'un autre tube porteur (9b, ...9N) une autre couche de gaine (11 b, ...11N) en un matériau ayant un indice de réfraction inférieur à l'indice de réfraction du coeur dopé (16) ;
h) On manchonne le coeur dopé (16) au moyen dudit tube porteur (9b, ...9N) ;
i) On élimine la partie externe dudit tube porteur (9b, ...9N) en s'arrêtant à ladite couche de gaine (11b, ...11N) déposée respectivement à l'intérieur dudit tube porteur (9b, ...9N) ;
j) On répète les étapes g) à i) N fois, avec N >1, jusqu'à l'obtention d'une première gaine (11) formée de l'empilement desdites couches de gaine (11 a, 11 b, ...11N) entourant le coeur (16) de manière à ce que la section de la première gaine (11) ait un diamètre 2B prédéterminé ;
k) On manchonne la préforme obtenue à l'étape précédente par un manchon ayant un indice de réfraction effectif inférieur à celui de la première gaine (11) de manière à former une seconde gaine (12) ;
l) on effectue la fusion et l'étirage de la préforme obtenue à l'étape précédente pour obtenir une fibre (20) multi gaine à coeur dopé monomode et à gaine guide de pompe multimode.

2. Procédé de fabrication d'une fibre optique selon la revendication 1, **caractérisé en ce que** la différence $\Delta$ entre l'indice de réfraction du coeur (1) de la fibre et l'indice de réfraction de la première gaine (6) de la fibre est comprise entre $0,5x10^{-3}$ et $5x10^{-3}$.

3. Procédé de fabrication d'une fibre optique selon l'une des revendication 1 ou 2 **caractérisé en ce que** l'indice de réfraction de la première gaine (6) de la fibre est supérieur à l'indice de réfraction de la silice pure d'au moins $5x10^{-3}$.

4. Procédé de fabrication d'une fibre optique selon l'une des revendications 1 à 3 **caractérisée en ce que** le matériau du coeur (16) est de la silice dopée d'au moins un élément terre rare parmi l'erbium, l'ytterbium, le thulium, l'holmium ou d'un mélange de ces éléments terres rares tels que Er-Yb ou Tm-Ho, et codopée d'un élément choisi parmi l'aluminium, le phosphore, le germanium, ou d'un mélange de ces codopants.

5. Procédé de fabrication d'une fibre optique selon l'une des revendications 1 à 4, **caractérisé en ce**

**que** le matériau de la première gaine (11) est en silice dopée au Germanium.

6. Procédé de fabrication d'une fibre optique selon l'une des revendications 1 à 5 **caractérisé en ce que** le manchon pour former la seconde gaine (12) est un tube de silice non dopée.

7. Procédé de fabrication d'une fibre optique selon l'une des revendications 1 à 5 **caractérisé en ce que** le manchon pour former la seconde gaine (12) comprend des capillaires aptes à former une fibre de type air-clad.

8. Procédé de fabrication d'une fibre optique multi gaine selon l'une des revendications 1 à 7 **caractérisé en ce que** les couches (11 a, 11 b, ...11N) formant la couche de gaine (11) ont des indices de réfraction prédéterminés de manière à ce que la couche de gaine (11) ait un profil d'indice du type en V, en W ou en M.

9. Procédé de fabrication d'une fibre optique multi gaine selon l'une des revendications 1 à 6, **caractérisé en ce qu'**il comprend les étapes supplémentaires suivantes avant l'étape l) de fusion étirage pour obtenir une fibre à maintien de polarisation :

   - Réalisation dans la première gaine (11) de la préforme finale de perçages s'étendant longitudinalement par rapport à l'axe de la préforme ;
   - Insertion dans les perçages de barreaux de contrainte en un matériau ayant un coefficient thermique d'expansion différent de celui de la première gaine (11).

10. Fibre optique (20) multi gaine à coeur dopé pour amplificateur à fibre ou pour laser à fibre, ladite fibre comprenant :

   - un coeur (1) dopé d'au moins un élément terre rare, ayant une section circulaire de diamètre $2a$ et d'indice de réfraction $n_c$ à une longueur d'onde d'amplification $\lambda_1$ et
   - une première gaine (6) multimode guide de pompe entourant complètement ledit coeur (1), ladite première gaine (6) ayant un indice de réfraction $n_{G1}$
   - une seconde gaine (7) de confinement de pompe, ladite seconde gaine entourant la première gaine 6 et ayant un indice de réfraction $n_{G2}$
   - les indices de réfraction étant tels que : $n_c > n_{G1} > n_{G2}$
   - l'indice de réfraction $n_{G1}$ de la première gaine (6) est supérieur d'au moins $5\times10^{-3}$ relativement à l'indice de réfraction de la silice pure,
   - la différence $\Delta$ entre l'indice de réfraction du coeur $n_c$ et l'indice de réfraction de la première gaine $n_{G1}$ est comprise entre $0,5\times10^{-3}$ et $5\times10^{-3}$,
   - le diamètre $2a$ du coeur (1) est prédéterminé pour limiter le paramètre V à une valeur inférieure à 2,405 de manière à ce que le coeur (1) soit monomode à la longueur d'onde $\lambda_1$ et **caractérisée en ce que** ;
   - le diamètre $2a$ du coeur dopé (1) est compris entre 40 et 100 microns et **en ce que** le diamètre $2b$ de la section de première gaine (6) multimode guide de pompe est compris entre 200 et 400 microns.

11. Fibre optique (20) selon la revendication 10 **caractérisée en ce que** la première gaine (6) comprend au moins un élément longitudinal de contrainte apte à maintenir la polarisation d'un signal se propageant dans le coeur (1) de ladite fibre.

12. Fibre optique (20) selon l'une des revendications 10 à 11 **caractérisée en ce que** la première gaine (6) comprend au moins un cylindre de section annulaire en matériau absorbant.

13. Fibre optique (20) selon l'une des revendications 10 à 12 **caractérisée en ce que** la seconde gaine (7) est une gaine en silice, une gaine en silice dopée bas indice ou une gaine de type air-clad.

14. Fibre optique (20) selon l'une des revendications 10 à 13 **caractérisée en ce que** :

   - le coeur (1) est en silice dopée d'au moins un élément terre rare parmi l'erbium, l'ytterbium, le thulium, l'holmium ou d'un mélange de ces éléments terres rares tels que Er-Yb ou Tm-Ho, et codopé d'un élément choisi parmi l'aluminium, le phosphore, le germanium, ou d'un mélange de ces codopants, et
   - la première gaine (6) est en silice dopée d'un élément apte à augmenter son indice de réfraction par rapport à l'indice de réfraction de la silice pure, tel que le germanium.

**Patentansprüche**

1. Verfahren zum Herstellen einer optischen Faser mit Mehrfachumhüllung und dotiertem Kern, das folgende Schritte aufweist:

   a) man bringt eine erste Umhüllungsschicht (11a) im Inneren eines ersten Trägerrohrs (9a) auf,
   b) man trägt eine zweite Schicht aus porösem Siliziumdioxid (13) im Inneren des die erste Umhüllungsschicht (11a) tragenden ersten Trägerrohrs (9a) auf,
   c) man imprägniert die poröse Siliziumdioxydschicht (13) mit einer Seltenerdsalze aufweisenden Lösung (14), um eine Seltenerddotierte Siliziumdioxydschicht (15) zu erhalten,

d) man bringt die Seltenerddotierte Siliziumdioxydschicht (15) in Glasform,

e) man reduziert das im Schritt d) erhaltene Rohr, um einen Stab mit einem Seltenerddotierten massiven Kern (16) zu erhalten, der von der ersten Umhüllungsschicht (11a) umgeben ist, die wiederum vom Trägerrohr (9a) umgeben ist,

f) man entfernt den äußeren Teil des ersten Trägerrohrs (9a), um den dotierten Kern (16) des von der ersten Umhüllungsschicht (11a) umgebenen Stabs zu erhalten,

g) man bringt im Inneren eines anderen Trägerrohrs (9b, ..., 9N) eine andere Umhüllungsschicht (11b, ..., 11N) mit einem kleineren Brechungsindex als dem des dotierten Kerns (16) auf,

h) man umgibt den dotierten Kern (16) mit dem besagten Trägerrohr (9b, ..., 9N),

i) man entfernt den äußeren Teil des Trägerrohrs (9b, ..., 9N), wobei man an der im Inneren des Trägerrohrs (9b, ..., 9N) aufgebrachten Umhüllungsschicht (11b, ..., 11N) aufhört,

j) man wiederholt die Schritte g) bis i) N mal, mit N>1, bis zum Erhalten einer aus der Aufschichtung der den Kern (16) umgebenden Umhüllungsschichten (11a, 11b, ..., 11N) gebildeten ersten Umhüllung (11), so daß der Querschnitt der ersten Umfüllung (11) einen vorbestimmten Durchmesser 2B aufweist.

k) man umgibt die im vorigen Schritt erhaltene Vorform mit einer Hülse, die einen kleineren effektiven Brechungsindex als jenen der ersten Umfüllung (11) aufweist, um eine zweite Umhüllung (12) zu bilden,

l) man führt die Fusion und das Strecken der im vorigen Schritt erhaltenen Vorform aus, um eine Mehrfachhüllenfaser (20) mit dotiertem Monomodekern und mit Multimode-Pumpleiterumhüllung zu erhalten.

2. Verfahren zum Herstellen einer optischen Faser gemäß Anspruch 1. **dadurch gekennzeichnet, daß** die Differenz $\Delta$ zwischen dem Brechungsindex des Kerns (1) der Faser und dem Brechungsindex der ersten Umhüllung (6) der Faser zwischen $0,5 \times 10^{-3}$ und $5 \times 10^{-3}$ beträgt.

3. Verfahren zum Herstellen einer optischen Faser gemäß einem der Ansprüche 1 oder 2, **dadurch gekennzeichnet, daß** der Brechungsindex der ersten Umhüllung (6) der Faser um wenigstens $5 \times 10^{-3}$ größer als der Brechungsindex des reinen Siliziumdioxids ist.

4. Verfahren zum Herstellen einer optischen Faser gemäß einem der Ansprüche 1 bis 3, **dadurch gekennzeichnet, daß** das Material des Kerns (16) mit wenigstens einem Seltenerdelement aus Erbium. Ytterbium. Thulium, Holmium oder einer Mischung aus diesen Seltenerdelementen wie zum Beispiel Er-Yb oder Tm-Ho dotiert ist und mit einem aus Aluminium. Phosphor, Germanium ausgewählten Element oder einer Mischung aus diesen Kodotierstoffen kodotiert ist.

5. Verfahren zum Herstellen einer optischen Faser gemäß einem der Ansprüche 1 bis 4, **dadurch gekennzeichnet, daß** das Material der ersten Umhüllung (11) aus mit Germanium dotiertem Siliziumdioxyd besteht.

6. Verfahren zum Herstellen einer optischen Faser gemäß einem der Ansprüche 1 bis 5, **dadurch gekennzeichnet, daß** die Hülse zum Bilden der zweiten Umhüllung (12) ein Rohr aus nicht dotiertem Siliziumdioxyd ist.

7. Verfahren zum Herstellern einer optischen Faser gemäß einem der Ansprüche 1 bis 5, **dadurch gekennzeichnet, daß** die Hülse zum Bilden der zweiten Umfüllung (12) Kapillarfasern aufweist, die geeignet sind, eine Faser vom Air-Clad-Typ zu bilden.

8. Verfahren zum Herstellen einer optischen Faser mit Mehrfachumhüllung gemäß einem der Ansprüche 1 bis 7, **dadurch gekennzeichnet, daß** die die Umhüllungsschicht (11) bildenden Schichten (11a, 11b, ..., 11N) derart vorbestimmte Brechungsindizes haben, daß die Umhüllungsschicht (11) ein Indexprofil vom V-Typ, W-Typ oder M-Typ aufweist.

9. Verfahren zum Herstellen einer optischen Faser mit Mehrfachumhüllung gemäß einem der Ansprüche 1 bis 6, **dadurch gekennzeichnet, daß** es vor dem Schritt l) der Fusion und des Streckens die folgende zusätzlichen Schritte aufweist, um eine Faser mit Erhalt der Polarisation zu erhalten:

- Einbringen in die erste Umfüllung (11) der endgültigen Vorform von Bohrungen, die sich in Bezug auf die Achse der Vorform längsgerichtet erstrecken,
- Einfügen von Beanspruchungsstangen, die aus einem Material sind, das einen von dem der ersten Umhüllung (11) verschiedenen Wärmeausdehnungskoeffizienten aufweist, in die Bohrungen.

10. Optische Faser (20) mit Mehrfachumhüllung und dotiertem Kern für einen Faserverstärker oder einen Faserlaser, wobei die Faser aufweist:

- einen mit wenigstens einem Seltenerdelement dotierten Kern (1), der einen kreisrunden Querschnitt mit einem Durchmesser 2a und einen Brechungsindex $n_c$ bei einer Verstärkungswellenlänge $\lambda_1$ aufweiset, und

- eine erste Multimode-Pumpleiter-Umhüllung (6), die den Kern (1) vollständig umhüllt, wobei die erste Umfüllung (6) einen Brecheungsindex $n_{G1}$ aufweist

- eine zweite Umhüllung (7) zur Pumpeingrenzung, wobei die zweite Umhüllung die erste Umhüllung (6) umhüllt und einen Brechungsindex $n_{G2}$ aufweist,

- wobei die Brechungsindizes so sind, daß $n_c > n_{G1} > n_{G2}$ ist,

- wobei der Brechungsindex $n_{G1}$ der ersten Umhüllung (6) um mindestens $5\times10^{-3}$ größer als der Brechungsindex des reinen Siliziumdioxyds ist,

- wobei die Differenz $\Delta$ zwischen dem Brechungsindex des Kerns $n_c$ und dem Brechungsindex der ersten Umhüllung $n_{G1}$ zwischen $0,5\times10^{-3}$ und $5\times10^{-3}$ beträgt,

- wobei der Durchmesser 2a des Kerns (1) derart vorbestimmt ist, daß der Parameter V auf einen Wert unter 2,405 begrenzt ist, damit der Kern (1) bei der Wellenlänge $\lambda_1$ monomodal ist,

**dadurch gekennzeichnet, daß**

- der Durchmesser 2a des dotierten Kerns (1) zwischen 40 und 100 $\mu$m beträgt und daß der Durchmesser 2b des Querschnitts der ersten Multimode-Pumpleiter-Umhüllung (6) zwischen 200 und 400 $\mu$m beträgt.

**11.** Optische Faser (20) gemäß Anspruch 10, **dadurch gekennzeichnet, daß** die erste Umhüllung (6) wenigstens ein längs gerichtetes Beanspruchungselement aufweiset, das dazu geeignet ist, die Polarisation eines sich im Kern (1) der Faser ausbreitenden Signals zu verhalten.

**12.** Optische Faser (20) gemäß einem der Ansprüche 10 bis 11, **dadurch gekennzeichnet, daß** die erste Umhüllung (6) wenigstens einen Zylinder mit ringförmigem Querschnitt aus absorbierendem Material aufweiset.

**13.** Optische Faser (20) gemäß einem der Ansprüche 10 bis 12. **dadurch gekennzeichnet, daß** die zweite Umhüllung (7) eine Umhüllung aus Siliziumdioxyd, eine Umhüllung aus mit schwachem Index dotiertem Siliziumdioxyd oder eine Umhüllung vom Air-Clad-Typ ist.

**14.** Optische Faser (20) gemäß einem der Ansprüche 10 bis 13, **dadurch gekennzeichnet, daß**

der Kern (1) aus mit wenigstens einem Seltener-element aus Erbium, Ytterbium. Thulium, Holmium oder einer Mischung aus diesen Seltenerdelementen wie zum Beispiel Er-Yb oder Tm-Ho dotiertem Siliziumdioxyd ist und mit einem aus Aluminium, Phosphor, Germanium ausgewählten Element oder einer Mischung aus diesen Kodotierstoffen kodotiert ist und die erste Umhüllung (6) aus mit einem Element wie zum Beispiel Germanium dotiertem Siliziumdioxyd ist, das geeignet ist, dessen Brechungsindex gegenüber dem Brechungsindex von reinem Siliziumdioxyd zu erhöhen.

**Claims**

**1.** A method for manufacturing a multi-clad, doped-core optical fibre comprising the following steps:

a) a first cladding layer (11 a) is deposited inside a first carrier tube (9a);
b) a second porous silica layer (13) is deposited inside said first carrier tube (9a) carrying the first cladding layer (11a);
c) the porous silica layer (13) is impregnated with a solution (14) comprising rare earth salts so as to obtain a layer (15) of rare-earth-doped silica;
d) the rare-earth-doped silica layer (15) is vitrified;
e) the tube hence obtained at step d) is swaged to form a bar comprising a rare-earth-doped solid core (16) surrounded by the first cladding layer (11a), itself surrounded by the carrier tube (9a);
f) the external part of the first carrier tube (9a) is removed to obtain the doped core (16) of the bar surrounded by the first cladding layer (11a);
g) another cladding layer (11 b, ...11N) made of a material having a refractive index lower than the refractive index of the doped core (16) is deposited inside another carrier tube (9b, ...9N);
h) the doped core (16) is sleeved by means of said carrier tube (9b, ...9N);
i) the external part of said carrier tube (9b, ...9N) is eliminated, stopping at said cladding layer (11 b, ...11N) deposited inside said carrier tube (9b, ...9N), respectively;
j) steps g) to i) are repeated N times, with N > 1, until obtaining a first cladding (11) formed of the stacking of said cladding layers (11 a, 11 b, ...11N) surrounding the core (16) so that the section of the first cladding (11) has a predetermined diameter 2B;
k) the preform obtained at the preceding step is sleeved by a sleeve having an effective refractive index lower than that of the first cladding (11) so as to form a second cladding (12);
l) the melting and the drawing of the preform obtained at the preceding step are performed to obtain a multi-clad fibre (20) with a single-mode doped core and with a multi-mode pump-guide cladding.

2. The method for manufacturing an optical fibre according to claim 1, **characterized in that** the difference $\Delta$ between the refractive index of the core (1) of the fibre and the refractive index of the first cladding (6) of the fibre is comprised between $0.5 \times 10^{-3}$ and $5 \times 10^{-3}$.

3. The method for manufacturing an optical fibre according to one of claim 1 or 2, **characterized in that** the refractive index of the first cladding (6) of the fibre is higher than the refractive index of the pure silica by at least $5 \times 10^{-3}$.

4. The method for manufacturing an optical fibre according to one of claims 1 to 3, **characterized in that** the material of the core (16) is silica doped with at least one rare earth element among erbium, ytterbium, thulium, holmium or a mixture of these rare earth elements such as Er-Yb or Tm-Ho, and co-doped with an element chosen among aluminium, phosphorus, germanium or a mixture of these co-dopants.

5. The method for manufacturing an optical fibre according to one of claims 1 to 4, **characterized in that** the material of the first cladding (11) is silica doped with germanium.

6. The method for manufacturing an optical fibre according to one of claims 1 to 5, **characterized in that** the sleeve to form the second cladding (12) is a non-doped silica tube.

7. The method for manufacturing an optical fibre according to one of claims 1 to 5, **characterized in that** the sleeve to form the second cladding (12) comprises capillaries adapted to form a fibre of the air-clad type.

8. The method for manufacturing a multi-clad optical fibre according to one of claims 1 to 7, **characterized in that** the layers (11a, 11b, ...11N) forming the cladding layer (11) have predetermined refractive indices so that the cladding layer (11) has a profile of index of the V-, W- or M-shaped type.

9. The method for manufacturing a multi-clad optical fibre according to one of claims 1 to 6, **characterized in that** it comprises the following additional steps before step l) of melting drawing to obtain a polarization-maintaining fibre:

- making, into the first cladding (11) of the final preform, drillings extending longitudinally with respect to the axis of the preform;
- inserting, into the drillings, stress bars made of a material having a thermal expansion coefficient different from that of the first cladding (11).

10. A multi-clad, doped-core optical fibre (20) for fibre amplifier or for fibre laser, said fibre comprising:

- a core (1) doped with at least one rare earth element, having a circular section of diameter 2a and of refractive index $n_c$ at a wavelength of amplification $\lambda_1$, and
- a first multi-mode pump-guide cladding (6) fully surrounding said core (1), said first cladding (6) having a refractive index $n_{G1}$,
- a second pump-confining cladding (7), said second cladding surrounding the first cladding (6) and having a refractive index $n_{G2}$,
- the refractive indices being such that: $n_c > n_{G1} > n_{G2}$,
- the refractive index $n_{G1}$ of the first cladding (6) is higher by at least $5 \times 10^{-3}$ relative to the refractive index of the pure silica,
- the difference $\Delta$ between the refractive index of the core $n_c$ and the refractive index of the first cladding $n_{G1}$ is comprised between $0.5 \times 10^{-3}$ and $5 \times 10^{-3}$,
- the diameter 2a of the core (1) is predetermined to limit the V parameter to a value lower than 2.405 so that the core (1) is single-mode at the wavelength $\lambda_1$ and **characterized in that**:
- the diameter 2a of the core (1) is comprised between 40 and 100 microns and **in that** the diameter 2b of the section of the first multi-mode pump-guide cladding (6) is comprised between 200 and 400 microns.

11. The optical fibre (20) according to claim 10, **characterized in that** the first cladding (6) comprises at least one longitudinal stress element adapted to maintain the polarization of a signal propagating in the core (1) of said fibre.

12. The optical fibre (20) according to one of claims 10 to 11, **characterized in that** the first cladding (6) comprises at least one cylinder of annular cross-section, made of an absorbent material.

13. The optical fibre (20) according to one of claims 10 to 12, **characterized in that** the second cladding (7) is a silica cladding, a low-index doped silica cladding or a cladding of the air-clad type.

14. The optical fibre (20) according to one of claims 10 to 13, **characterized in that**:

- the core (1) is made of silica doped with at least one rare earth element among erbium, ytterbium, thulium, holmium or a mixture of these rare earth elements such as Er-Yb or Tm-Ho, and co-doped with an element chosen among aluminium, phosphorus, germanium or a mixture of this co-dopants, and

- the first cladding (6) is made of silica doped with an element adapted to increase its refractive index with respect to the refractive index of the pure silica, such as germanium.

2a

1

2

3

4

5

2b

Art antérieur

Figure 1

$n_1$

$n_2$

2a

2b

$n_3$

0

r

Art antérieur

Figure 2

Figure 3

Figure 4

Figure 5

6A

$n_{G1}$

6B

$n_{G1}$

6C

$n_{G1}$

6D

$n_{G1}$

6E

$n_{G1}$

6F

$n_{G1}$

6G

$n_{G1}$

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6408652 B
- WO 0138244 A
- US 5907652 A
- US 7050686 B